# EUROPÄISCHE PATENTSCHRIFT

(11) **EP 1 752 509 B1**
(45) Veröffentlichungstag und Bekanntmachung des Hinweises auf die Patenterteilung: **08.08.2007**
(21) Anmeldenummer: 05017681.7
(22) Anmeldetag: 13.08.2005
(51) Int. Cl.: C09K 5/06, C04B 38/00, C04B 20/00, C08K 7/00

(54) **Verfahren zur Erhöhung der Wärmespeicherkapazität von Bausteinen aus einem Kalzium-Silikat-Material sowie Baustein aus einem Kalzium-Silikat-Material**
Process for increasing the heat storage capacity of calcium - silicate construction bricks and construction brick made from calcium- silicate
Procédé pour augmenter la capacité thermique des blocs de construction en silicate de calcizum et block de construction en silicate de calcium

(43) Veröffentlichungstag der Anmeldung: 14.02.2007
(73) Patentinhaber: H + H CELCON GmbH, 23829 Wittenborn (DE)
(72) Erfinder: Witthohn, Michael, 23829 Wittenborn (DE); Klemm, Robert, 09123 Chemnitz (DE)
(74) Vertreter: von Eichel-Streiber, Caspar

(56) Entgegenhaltungen:
- EP-A- 1 493 777
- DE-A1- 10 107 145
- PATENT ABSTRACTS OF JAPAN Bd. 011, Nr. 080 (C-409), 11. März 1987 (1987-03-11) & JP 61 235484 A (SEKISUI PREFAB HOMES LTD), 20. Oktober 1986 (1986-10-20)

## Beschreibung

Die Erfindung betrifft ein Verfahren zur Erhöhung der Wärmespeicherkapazität von Bausteinen aus einem Kalzium-Silikat-Material, insbesondere von Porenbetonsteinen, gemäß dem Oberbegriff des Patentanspruches 1. Die Erfindung betrifft ferner einen Baustein aus einem Kalzium-Silikat-Material, vorzugsweise aus Porenbeton.

Kalzium-Silikat basierende Bausteine sind als Baumaterialien bekannt und werden vielfach genutzt. So werden insbesondere Bausteine aus sogenanntem Porenbeton, auch AAC (Autoclaved Aerated Concrete), bzw. veraltet Gasporenbeton oder Gasbeton genannt, verwendet, um hieraus Steinbauten zu errichten. Unter "Bausteinen" im Sinne dieser Anmeldung sollen nicht nur die bekannten und üblichen Quader zum Errichten von Mauern verstanden werden, sondern auch Schlusssteine zum Überdecken von Tür- bzw. Fensteröffnungen, Fertigelemente zum Errichten größerer Einheiten oder Fertighäuser, plattenförmige Elemente als Deckenplatten und dgl. dreidimensionale Elemente, die zum Errichten von Hallen, Häusern und dgl. Gebäude bzw. zum Innenausbau derselben Verwendung finden.

Kalzium-Silikat basierende Bausteine, insbesondere Porenbeton erfreut sich in der Bauwirtschaft einer hohen Beliebtheit, da es ein zügiges Errichten von Gebäuden ermöglicht und sehr gute Eigenschaften aufweist. So ist bekannt, dass insbesondere Porenbeton aufgrund der in diesem Material eingeschlossenen Luft- bzw. Gasbläschen hervorragende wärmeisolierende Eigenschaften hat. Es hat aber auch einen vergleichsweise niedrigen Wasserdampfdiffusionswiderstand, so dass es auch hinsichtlich der Feuchtigkeit zu einem guten Innenklima der mit diesen Bausteinen errichteten Gebäude beiträgt.

Verbesserungswürdig bei den hinlänglich bekannten Bausteinen aus Kalzium-Silikat-Material ist allerdings deren Wärmespeicherkapazität. Dies ist die Eigenschaft, Umgebungswärme aufzunehmen und zu speichern. Eine hohe Wärmespeicherkapazität des Baumaterials eröffnet Möglichkeiten hinsichtlich der Energieeinsparung für das Heizen bzw. Kühlen von mit diesem Material errichteten Gebäuden. So kann das Baumaterial in warmen Phasen ein entsprechendes Überangebot an Wärme (z.B. aufgrund von Sonneneinstrahlung) aufnehmen, ohne dass sich das Innere des Gebäudes übermäßig erhitzt und gekühlt werden muss. Diese gespeicherte Wärme kann dann in einer kalten Phase wieder abgegeben werden, so dass der Energiebedarf für ein Heizen des Gebäudeinneren reduziert wird.

In der DE 199 29 861, deren Offenbarung als Grundlage für die Formulierung des Oberbegriffs des Anspruches 1 dient, ist ein Verfahren zur Erhöhung der Wärmespeicherkapazität von porösen Trägermaterialien bekannt. Bei diesem Verfahren wird ein sogenanntes Schmelzwärmespeichermaterial in den Poren des porösen Trägermaterials eingebunden und verbleibt dort dauerhaft, indem das mit dem Schmelzwärmespeichermaterial versehene Trägermaterial nachträglich umhüllt wird. Das Schmelzwärmespeichermaterial durchläuft in einem bestimmten Temperaturbereich einen Phasenübergang, wobei es Energie in Form von Wärme aufnimmt. Bei Abkühlung wird der umgekehrte Phasenübergang durchlaufen, wobei die zunächst aufgenommene Wärme wieder freigesetzt wird.

In der DE 199 29 861 ist auch beschrieben, dass diese Technik auf Porenbeton, Ziegel und dgl. Baustoffe angewandt werden kann. Beschrieben wird hierbei, dass die entsprechenden Elemente, beispielsweise Porenbetonsteine, in einem verflüssigten Schmelzwärmespeichermaterial getränkt wird, um dieses in den Stein aufzunehmen. Anschließend soll dann der Stein insgesamt mit einem Bindemittel umhüllt werden. Dies geschieht offensichtlich, um durch Wärmeeintrag verflüssigtes Schmelzwärmespeichermaterial vor einem Austritt aus dem Stein zu hindern.

Grundsätzlich ist in der genannten Druckschrift ein Verfahren beschrieben, mit welchem die Wärmespeicherkapazität von Kalzium-Silikat-Material, beispielsweise Porenbeton, erhöht werden kann. Allerdings ergeben sich hier auch Probleme. Insbesondere ist es, wie in der Druckschrift beschrieben, erforderlich, die durch Tränken mit dem Schmelzwärmespeichermaterial durchsetzten Steine anschließend mit einem Bindemittel zu umhüllen. Nachteilig ist dabei, dass sich der Wasserdampfdiffusionswiderstand des so behandelten Steines deutlich erhöht, wenn die Bindemittelschicht nicht sogar als Sperrschicht wirkt. Damit aber verliert der so behandelte Steine seine günstigen Eigenschaften hinsichtlich der Wirkung auf das Raumklima des mit ihm umbauten Raumes.

Im übrigen ist der Einsatz der in der DE 199 29 861 als Schmelzwärmespeichermaterial vorgeschlagenen Paraffinöle in Porenbetonsteinen kritisch, da derartige Öle die statischen Eigenschaften des Porenbetons negativ beeinflussen können. Bei normalem Beton liegt die Festigkeitsminderung durch Öle und Fette immerhin bei bis zu 25%. Es ist insoweit höchst fraglich, ob ein wie in der DE 199 29 861 vorgeschlagen behandelter Porenbetonstein oder ein ähnlicher Baustein aus einem Kalzium-Silikat-Material überhaupt noch den an diesen Stein gestellten statischen Eigenschaften entspricht und somit zum Errichten von Gebäuden noch verwendet werden kann.

Ausgehend von dem bekannten Stand der Technik ist es daher Aufgabe der Erfindung, ein aus der DE 199 29 861 grundsätzlich bekanntes Verfahren dahingehend zu verbessern, dass es in Bausteinen aus einem Kalzium-Silikat-Material eingesetzt werden kann, ohne dass sich die statischen Eigenschaften sowie die Eigenschaften hinsichtlich der Wasserdampfdiffusion der Bausteine wesentlich verändern.

Zur Lösung dieser Aufgabe wird zunächst ein Verfahren mit den Merkmalen des Anspruches 1 angegeben. Vorteilhafte Weiterbildungen dieses Verfahrens sind in den abhängigen Ansprüchen 2 bis 7 genannt.

Einen Baustein, der die genannte Aufgabe löst, weist erfindungsgemäß die in Anspruch 8 angegebenen Merkmale auf. Vorteilhafte Weiterbildungen des erfindungsgemäßen Bausteines sind in den abhängigen Ansprüchen 9 sowie 10 angegeben.

Wesentliche Idee der Erfindung ist es, ein Schmelzwärmespeichermaterial nicht als solches durch nachträgliches Tränken in den fertigen Baustein einzubringen, sondern in gekapselter Form in den Baustein zu integrieren. Erfindungsgemäß wird das Material dabei in den Baustein schon während seiner Herstellung eingebracht, in dem das gekapselte als Wärmespeichermaterial zumindest einem der Ausgangsmaterialien und/oder zumindest einem Zwischenprodukt zugegeben wird.

Unter Schmelzwärmespeichermaterial im Sinne dieser Anmeldung soll ein jegliches Material verstanden werden, welches in einem sinnvollen Temperaturbereich einen oder mehrere Phasenübergänge erfährt. Als sinnvoll ist der Bereich zwischen 0°C und 50°C, insbesondere zwischen 10°C und 30°C anzusehen. Das Schmelzwärmespeichermaterial kann dabei nicht nur Phasenübergänge von fest zu flüssig und umgekehrt durchlaufen, sondern auch von fest zu gasförmig (Sublimation) und umgekehrt bzw. Phasenübergänge von flüssig zu gasförmig und umgekehrt. Entscheidend ist lediglich, dass das Material in dem interessanten Temperaturbereich irgendeinen Phasenübergang durchläuft und im Zuge desselben Energie in Form von Wärme speichert.

Dadurch, dass erfindungsgemäß das Schmelzwärmespeichermaterial in gekapselter Form in den Baustein integriert wird, ist sichergestellt, dass das Material bei einem Phasenübergang aus dem Baustein nicht entweichen kann. Andererseits ist der Baustein nicht als ganzer mit einem Bindemittel zu umhüllen, so dass er seine günstigen raumklimatischen Eigenschaften behält. Zudem steht das Schmelzwärmespeichermaterial nicht in untermittelbarem Kontakt mit dem Material des Bausteins, so dass sich ein negativer Einfluss auf dessen Festigkeit und Statik nicht ergibt.

Mit Vorteil wird das gekapselte Schmelzwärmespeichermaterial in Mikrokapseln mit einem Durchmesser von 1 Mikrometer bis 40 Mikrometer, vorzugsweise von 2 Mikrometer bis 20 Mikrometer, zugegeben (Anspruch 2). Mit Mikrokapseln in einer solchen Größe, kann zum einen eine besonders gute, homogene Durchsetzung des so ausgerüsteten Bausteines erreicht werden. Zum anderen sind die Kapseln zu klein, als dass sie bei einem nachträglichen Bearbeiten des Steines durch beispielsweise Schleifen, Bohren, Schneiden und dgl. zerstört werden. Verglichen mit den für die genannten Vorgänge eingesetzten Werkzeugen sind die Kapseln so klein, dass sie als Ganzes mit der Späne, dem Schleifstaub oder dgl. entfernt werden.

Als Schmelzwärmespeichermaterial hat sich Paraffin bzw. ein Paraffingemisch und/oder ein Wachs als besonders geeignet erwiesen (Anspruch 3). Als optimaler Bereich für eine Temperatur des Phasenüberganges und damit der Wärmespeicherung hat sich ein Bereich zwischen 18°C und 35°C, vorzugsweise zwischen 22°C und 28°C, insbesondere von etwa 26°C herausgestellt. Dabei sollte das Schmelzwärmespeichermaterial im Phasenübergang eine Wärmespeicherkapazität ΔH von zwischen 50 J/g und 200 J/g, vorzugsweise zwischen 80 J/g und 150 J/g haben (Anspruch 4).

Damit das gekapselte Schmelzwärmespeichermaterial das Herstellungsverfahren von Kalzium-Silikat-Material unbeschadet übersteht, sollte das Material der Kapseln bzw. Hülle bei Temperaturen bis zu wenigstens 190°C, vorzugsweise bis zu wenigstens 200°C stabil sein. Temperaturen in diesem Bereich werden beispielsweise bei der Herstellung von Porenbeton in der Autoklave erreicht. Als ein geeignetes Material hat sich ein Polymer, vorzugsweise ein hoch vernetztes Polymethylmetacrylat, erwiesen (Anspruch 6).

Damit die Wärmespeicherkapazität des Bausteines in ausreichendem Maß erhöht ist, ohne dass der Baustein selbst aufgrund eines zu hohen Anteils des gekapselten Wärmespeichermaterials in seiner Stabilität und den sonstigen Eigenschaften beeinträchtigt wird, wird das gekapselte Schmelzwärmespeichermaterial in einer solchen Menge zugegeben, dass es bei dem fertigen Baustein einen Anteil von 5 kg/m³ bis 25 kg/m³ ausmacht.

Die hinsichtlich des erfindungsgemäßen Verfahrens vorgenannten Vorteile gelten entsprechend auch für einen in den Ansprüchen 8 bis 10 charakterisierten Baustein.

In praktischen Versuchen konnte der Erfolg des erfindungsgemäßen Verfahrens bei der Herstellung von mit entsprechend gekapselten Schmelzwärmespeichermaterial versehenen Porenbetonsteinen gezeigt werden. Verwendet wurde dabei als Schmelzwärmespeichermaterial ein in Mikrokapseln mit Durchmessern zwischen 2 Mikrometer bis 20 Mikrometer gespeichertes Paraffingemisch, wobei die Hüllen der Mikrokapseln aus einem hoch vernetzten Polymethylmetacrylat bestanden. Der Schmelzpunkt der Paraffinmischung lag bei 26°C, die Mischung wies im Phasenübergang eine Wärmespeicherkapazität ΔH von 110 J/g. In dem fertigen Porenbetonstein lag das Schmelzwärmespeichermaterial in einem Anteil von etwa 10 kg/m³ vor. Dabei war es für die Herstellung der Porenbetonsteine mit dem Schmelzwärmespeichermaterial erforderlich, das Herstellungsverfahren entsprechend anzupassen. Insbesondere die abschließende Reaktion des Porenbetons in der Autoklave musste in der Verfahrensführung verändert werden. So musste bei der Drucksteuerung, die entsprechend auch den Temperaturverlauf vorgibt, darauf geachtet werden, den Druck verglichen mit dem Herstellungsverfahren "normaler" Porenbetonsteine langsamer auf- bzw. abzufahren, um den Anstieg bzw. das Absinken der Temperaturen zu verlangsamen. Dies war erforderlich, damit die Schmelzwärmespeichermaterialien keinen zu starken Druck bzw. Temperaturveränderungen bezogen auf die Zeit ausgesetzt sind. Zu schnelle Druckveränderungen könnten nämlich zu einem spontanen Phasenübergang und damit einem Platzen der mit dem Schmelzwärmespeichermaterial gefüllten Kapseln führen.

In Versuchen hat sich gezeigt, dass gegenüber herkömmlichem Porenbeton der entsprechend dem erfindungsgemäßen Verfahren behandelte bzw. hergestellte Porenbeton eine deutlich erhöhte Wärmespeicherkapazität zeigte, ohne seine günstigen Eigenschaften hinsichtlich der Festigkeit und des Wasserdampfdiffusionswiderstandes zu verlieren.

## Patentansprüche

1. Verfahren zur Erhöhung der Wärmespeicherkapazität von Bausteinen aus einem Kalzium-Silikat-Material, insbesondere von Porenbetonsteinen, wobei in die Bausteine ein oder mehrere Phasenübergänge durchlaufendes Schmelzwärmespeichermaterial (PCM) eingebracht wird, **dadurch gekennzeichnet, dass** das Schmelzwärmespeichermaterial in gekapselter Form während der Herstellung der Bausteine einem oder mehreren der Ausgangsmaterialien und/oder einem oder mehreren Zwischenprodukten zugegeben und so bei einer nachfolgenden Herstellung der fertigen Bausteine in diese eingebunden wird.

2. Verfahren nach Anspruch 1, **dadurch gekennzeichnet, dass** das gekapselte Schmelzwärmespeichermaterial in Mikrokapseln mit einem Durchmesser von 1 µm bis 40 µm, vorzugsweise von 2 µm bis 20 µm, zugegeben wird.

3. Verfahren nach einem der vorhergehenden Ansprüche, **dadurch gekennzeichnet, dass** als Schmelzwärmespeichermaterial ein Paraffingemisch und/oder ein Wachs verwendet wird.

4. Verfahren nach einem der vorhergehenden Ansprüche, **dadurch gekennzeichnet, dass** als Schmelzwärmespeichermaterial ein Material mit einem Schmelzpunkt zwischen 18°C und 35°C, vorzugsweise zwischen 22°C und 28°C, und einer Wärmespeicherkapazität ΔH im Phasenübergang von zwischen 50 J/g und 200 J/g, vorzugsweise zwischen 80 J/g und 150 J/g, verwendet wird.

5. Verfahren nach einem der vorhergehenden Ansprüche, **dadurch gekennzeichnet, dass** das Schmelzwärmespeichermaterial in einer Hülle aus einem Material gekapselt ist, welches bei Temperaturen von bis zu wenigstens 190°C, vorzugsweise bis zu wenigstens 200°C stabil ist.

6. Verfahren nach einem der vorhergehenden Ansprüche, **dadurch gekennzeichnet, dass** das Schmelzwärmespeichermaterial in einer Hülle aus einem Polymer, vorzugsweise aus einem hochvernetzten Polymethylmethacrylat, gekapselt ist.

7. Verfahren nach einem der vorhergehenden Ansprüche, **dadurch gekennzeichnet, dass** das gekapselte Schmelzwärmespeichermaterial in einer Menge von 5 kg/m³ bis 25 kg/m³ bezogen auf das Volumen des fertigen Bausteines zugegeben wird.

8. Baustein aus einem Kalzium-Silikat-Material, vorzugsweise aus Porenbeton, **dadurch gekennzeichnet, dass** er ein Schmelzwärmespeichermaterial in gekapselter Form, vorzugsweise in Form von Mikrokapseln mit einem Durchmesser zwischen 1 µm und 40 µm, besonders bevorzugt zwischen 2 µm und 20 µm, enthält.

9. Baustein nach Anspruch 8, **dadurch gekennzeichnet, dass** das gekapselte Schmelzwärmespeichermaterial homogen über das Volumen des Bausteins verteilt ist.

10. Baustein nach einem der Ansprüche 8 oder 9, **dadurch gekennzeichnet, dass** er das gekapselte Wärmespeichermaterial zu einem Anteil von wenigstens 5 kg/m³, vorzugsweise wenigstens 10 kg/m³ enthält.

## Claims

1. Method for increasing the heat storage capacity of building blocks of a calcium-silicate material, particularly aerated concrete blocks, a melting heat storage material (PCM) passing through one or more phase transitions being introduced into the building blocks, **characterized in that** the melting heat storage material in encapsulated form during the manufacture of the building blocks is added to one or more of the starting materials and/or one or more of the intermediate products and in this way during a subsequent manufacture of the finished building blocks is bound into the latter.

2. Method according to claim 1, **characterized in that** the encapsulated melting heat storage material is added in microcapsules having a diameter of 1 to 40 µm, preferably 2 to 20 µm.

3. Method according to one of the preceding claims, **characterized in that** a paraffin mixture and/or wax is used as the melting heat storage material.

4. Method according to one of the preceding claims, **characterized in that** the melting heat storage material is constituted by a material having a melting point between 18 and 35°C, preferably between 22 and 28°C, and a heat storage capacity ΔH in the phase transition of between 50 and 200 J/g, preferably between 80 and 150 J/g.

5. Method according to one of the preceding claims, **characterized in that** the melting heat storage material is encapsulated in an envelope of a material which is stable at temperatures of up to at least 190°C, preferably up to at least 200°C.

6. Method according to one of the preceding claims, **characterized in that** the melting heat storage material is encapsulated in an envelope of a polymer, preferably of a highly crosslinked polymethyl methacrylate.

7. Method according to one of the preceding claims, **characterized in that** the encapsulated melting heat storage material is added in a quantity of 5 to 25 kg/m³, based on the volume of the finished building block.

8. Building block of a calcium-silicate material, preferably aerated concrete, **characterized in that** it contains a melting heat storage material in encapsulated form, preferably in the form of microcapsules having a diameter between 1 and 40 µm and in particularly preferred manner between 2 and 20 µm.

9. Building block according to claim 8, **characterized in that** the encapsulated melting heat storage material is homogeneously distributed over the building block volume.

10. Building block according to one of the claims 8 or 9, characterize din that it contains the encapsulated heat storage material in a proportion of at least 5 kg/m³, preferably at least 10 kg/m³.

## Revendications

1. Procédé pour améliorer la capacité de stockage de chaleur de modules d'un matériau à base de silicate de calcium, en particulier de pierres en béton poreux, le matériau accumulateur de chaleur de fusion (PCM) passant par une ou plusieurs transitions de phase étant introduit dans les modules, **caractérisé en ce que** le matériau accumulateur de chaleur de fusion est ajouté sous forme encapsulée pendant la fabrication des modules à un ou plusieurs des matériaux de départ et/ou à un ou plusieurs produits intermédiaires et est intégré ainsi, lors d'une fabrication consécutive des modules achevés, dans ceux-ci.

2. Procédé selon la revendication 1, **caractérisé en ce que** le matériau accumulateur de chaleur de fusion encapsulé est ajouté dans des microcapsules présentant un diamètre de 1 µm à 40 µm, de préférence de 2 µm à 20 µm.

3. Procédé selon l'une quelconque des revendications précédentes, **caractérisé en ce qu'**un mélange de paraffine et/une cire est utilisé comme matériau de stockage de chaleur de fusion.

4. Procédé selon l'une quelconque des revendications précédentes, **caractérisé en ce que**, comme matériau accumulateur de chaleur de fusion, on utilise un matériau avec un point de fusion compris entre 18°C et 35°C, de préférence entre 22°C et 28°C, et une capacité de stockage de chaleur ΔH dans la transition de phase comprise entre 50 J/g et 200 J/g, de préférence entre 80 J/g et 150 J/g.

5. Procédé selon l'une quelconque des revendications précédentes, **caractérisé en ce que** le matériau accumulateur de chaleur de fusion est encapsulé dans une enveloppe à base d'un matériau qui est stable à des températures allant jusqu'à au moins 190°C, de préférence jusqu'à au moins 200°C.

6. Procédé selon l'une quelconque des revendications précédentes, **caractérisé en ce que** le matériau accumulateur de chaleur de fusion est encapsulé dans une enveloppe à base d'un polymère, de préférence d'un polyméthylméthacrylate très réticulé.

7. Procédé selon l'une quelconque des revendications précédentes, **caractérisé en ce que** le matériau accumulateur de chaleur de fusion encapsulé est ajouté dans une quantité de 5 kg/m³ jusqu'à 25 kg/m³ par rapport au volume du module terminé.

8. Module de matériau à base de silicate de calcium, de préférence à base de béton poreux, **caractérisé en ce qu'**il contient un matériau accumulateur de chaleur de fusion dans une forme encapsulée, de préférence sous la forme de microcapsules avec un diamètre compris entre 1 µm et 40 µm, avec une préférence particulière entre 2 µm et 20 µm.

9. Module selon la revendication 8, **caractérisé en ce que** le matériau accumulateur de chaleur de fusion encapuslé est réparti de façon homogène sur le volume du module.

10. Module selon l'une quelconque des revendications 8 et 9, **caractérisé en ce qu'**il contient le matériau accumulateur de chaleur encapsulé pour une fraction d'au moins 5 kg/m³, de préférence d'au moins 10 kg/m³.
